# EUROPEAN PATENT APPLICATION

(11) **EP 2 653 072 A2**
(43) Date of publication of application: **23.10.2013**
(21) Application number: 13164213.4
(22) Date of filing: 17.04.2013
(51) Int. Cl.: A47G 7/04, F16B 2/08

(54) **Item mounting assembly**

(30) Priority: 17.04.2012 GB 201206769
(71) Applicant: Stone, Mark Andrew, Belper Derbyshire DE56 1HN (GB)
(72) Inventor: Stone, Mark Andrew, Belper Derbyshire DE56 1HN (GB)
(74) Representative: Blower, Timothy John

(57) **Abstract**

An item mounting assembly (10) includes an item 12 such as a planter and a mounting arrangement (14) for mounting the item (12) to a support (16) such as a rail. The arrangement (14) includes a mounting member (18), a fixing (20) for fixing the mounting member (18) to the support (16) and an association (22) between the mounting member (18) and the item (12). In use, the association (22) locates the item (12) in a mounted position on the mounting member (18) and only permits the item (12) to move to and from the mounted position along substantially one direction.

## Description

The present invention relates to item mounting assemblies, particularly but not exclusively item mounting assemblies for mounting items to supports such as rails.

Conventionally, when an item such as a planter is fixed to a rail, a purpose designed bracket is used which extends around the rail and comprises a threaded member which projects upwardly. The planter is positioned over the threaded member and secured in position with a nut. However the brackets are relatively expensive, and a plurality of bracket types are required to cater for different planters and different rails. The brackets and fixings are visible, and are therefore inherently insecure. In some cases, brackets have to be bespoke to the rail. Installation and removal are time consuming and therefore expensive, and where the planters are located, for example, in the central reservation of busy roads, operators are exposed to hazards during installation and removal, and the work means that road lanes may have to be closed and/or traffic disrupted.

According to a first aspect of the present invention there is provided an item mounting assembly, the assembly including an item and a mounting arrangement for mounting the item to a support such as a rail, the arrangement including a mounting member, a fixing for fixing the mounting member to the rail and an association between the mounting member and the item, whereby in use the association locates the item in a mounted position on the mounting member and only permits the item to move to and from the mounted position along substantially one direction.

Possibly, the association includes an entrant association between the mounting member and the item.

Possibly, the item defines a cavity in which the mounting member is at least partially located in the mounted position, and the cavity forms part of the entrant association.

Possibly, in the mounted position, the mounting member extends outwardly from the support, and increases in cross sectional width away from the support. Possibly, the mounting member is dovetail shaped in cross section. Possibly, the cavity corresponds in cross-sectional shape to the mounting member. Possibly, the cavity extends to an end face of the item, which may define an end face cavity aperture.

Possibly, in the mounted position, the mounting member is substantially not visible. Possibly, in the mounted position, the mounting member is substantially wholly received within the cavity. Possibly, the item defines a support receiving recess, and possibly, in the mounted position, the support is at least partially received within the recess. Possibly, the recess has a depth which is at least the depth of the support.

Possibly, the association includes an interference association between the mounting member and the item, which may permit a push fit assembly of the item to the mounting member when moving to the mounted position, but may prevent movement of the mounting member from the mounted position.

Possibly, the interference association includes an interference member, which must be moved by a user from a interference position to a accommodation position to permit movement of the mounting member from the mounted position. Possibly, the interference member is biased to the interference position. Possibly, at least part of the interference member is formed of a resiliently deformable material to permit biasing of the interference member.

Possibly, the item defines a passage in which the interference member is at least partially receivable, and the passage forms part of the interference association. Possibly, the passage extends from an outside surface of the item to the cavity.

Possibly, the passage is arranged to permit a tool is to be inserted therealong to move the interference member from the interference position to the accommodation position. Possibly, the passage is arranged so that a tool is required to move the interference member from the interference position to the accommodation position required.

Possibly, the item extends along a longitudinal axis. Possibly, the support extends along a longitudinal axis, and possibly, in the mounted position, the item longitudinal axis extends substantially parallel with the support longitudinal axis. Possibly, the said one direction is along or parallel with the support longitudinal axis.

Possibly, the assembly is arranged so that in moving the item to the mounted position, the item must be moved in sequence from an unmounted position to an intermediate position along a first direction and thence to the mounted position along a second direction, the second direction being different to the first direction. Possibly, the second direction is perpendicular to the first direction. Possibly, the said one direction is the same as the second direction.

Possibly, the assembly is arranged so that in moving the item from the mounted position to the unmounted position, the item must be moved in sequence from the mounted position to an intermediate position along the second direction and thence to the unmounted position along the first direction.

Possibly, the intermediate position abuts or adjoins the mounted position.

Possibly, the item mounting assembly includes a pair of spaced mounting arrangements.

Possibly, in one of the mounting arrangements, the item defines a mounting member receiving space, in which the mounting member is receivable, and which abuts or adjoins the cavity. Possibly, in the intermediate position, the respective mounting member is located in the receiving space.

Possibly, the item is a planter, which may define a plant material receiving space. Possibly, the support is a rail, possibly of a barrier or fence.

According to a second aspect of the present invention there is provided an item for an item mounting assembly as described above.

According to a third aspect of the present invention there is provided a mounting member for an item mounting assembly as described above.

According to a fourth aspect of the present invention there is provided a tool for an item mounting assembly as described above.

Possibly, the tool comprises a pair of spaced elongate projections which correspond with the passages of the pair of mounting arrangements. Possibly, the tool comprises a body engaging part, which may extend between the projections, and in use the user may apply a force to the tool to move two of the interference members to the accommodation position substantially simultaneously.

According to a fifth aspect of the present invention there is provided a method of mounting an item on a support, the method including providing an item mounting assembly, the assembly including an item and a mounting arrangement for mounting the item to a support such as a rail, the arrangement including a mounting member, a fixing for fixing the mounting member to the rail and an association between the mounting member and the item, whereby in use the association locates the item in a mounted position on the mounting member and only permits the item to move to and from the mounted position along substantially one direction.

Possibly, the method includes any of the steps described above. Possibly, the assembly includes any of the features described above.

Embodiments of the present invention will now be described, by way of example only, and with reference to the accompanying drawings, in which:-
Fig. 1 is a perspective view from one side, one end and above of an item mounting assembly in a mounted position on a support in the form of a rail, with a release tool shown alongside;
Fig. 2 is a perspective view from one side, one end and above of part of the assembly comprising a pair of spaced mounting members and fixings in a mounted position on the support;
Fig. 3 is a perspective view from above of one of the mounting members of Fig 2;
Fig. 4 is a side view of the mounting member of Fig 3;
Fig. 5 is a perspective view from one side, one end and below of an item comprising the item mounting assembly in an unmounted position;
Fig. 6 is an end cross sectional view of the assembly in the mounted position; and
Fig. 7 is a plan cross sectional view of the assembly in the mounted position.

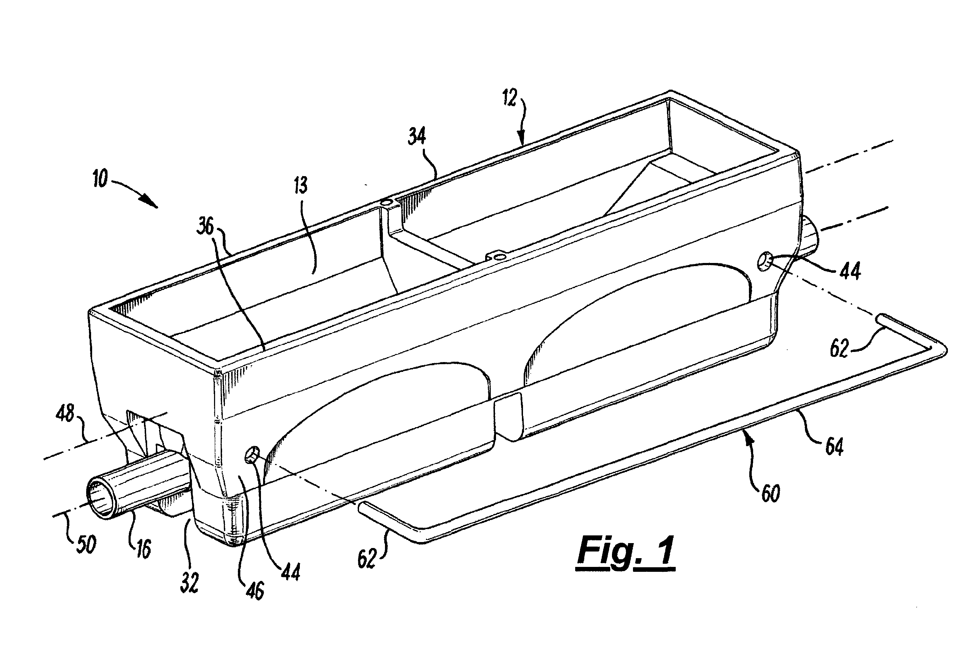

Figs. 1 to 8 show an item mounting assembly 10, the assembly 10 including an item 12 which in the example shown is in the form of a planter. The assembly 10 includes a mounting arrangement 14 for mounting the item 12 to a support such as a rail 16. The arrangement 14 includes a mounting member 18, a fixing 20 for fixing the mounting member 18 to the rail 16 and an association 22 between the mounting member 18 and the item 12. In use, the association 22 locates the item 12 in a mounted position on the mounting member 18 and only permits the item 12 to move to and from the mounted position along substantially one direction.

The planter 12 includes a planter interior 13 in which, in use, planting material (not shown) is located. The planter 12 could be formed of plastics material, and could be formed by moulding. In one example, the planter 12 could be formed by rotational moulding. The planter 12 could be of the self-watering type, in which side walls and base of the planter 12 are hollow and can be used as a water reservoir.

In the example shown, the rail 16 is in the form of a tube of a substantially circular cross-section, and could be formed of material such as galvanised mild steel or stainless steel. The rail 16 could form part of a fence or barrier located alongside a roadway. The rail 16 extends along a longitudinal axis 50.

In the example shown, the item mounting assembly 10 includes a pair of spaced mounting arrangements 14.

Each association 22 includes an entrant association 24 between the respective mounting member 18 and the item 12.

The item 12 extends along a longitudinal axis 48 and defines a pair of spaced cavities 26. In the mounted position, each mounting member 18 is located substantially wholly within one respective corresponding cavity 26. Each cavity 26 forms part of the respective association 24.

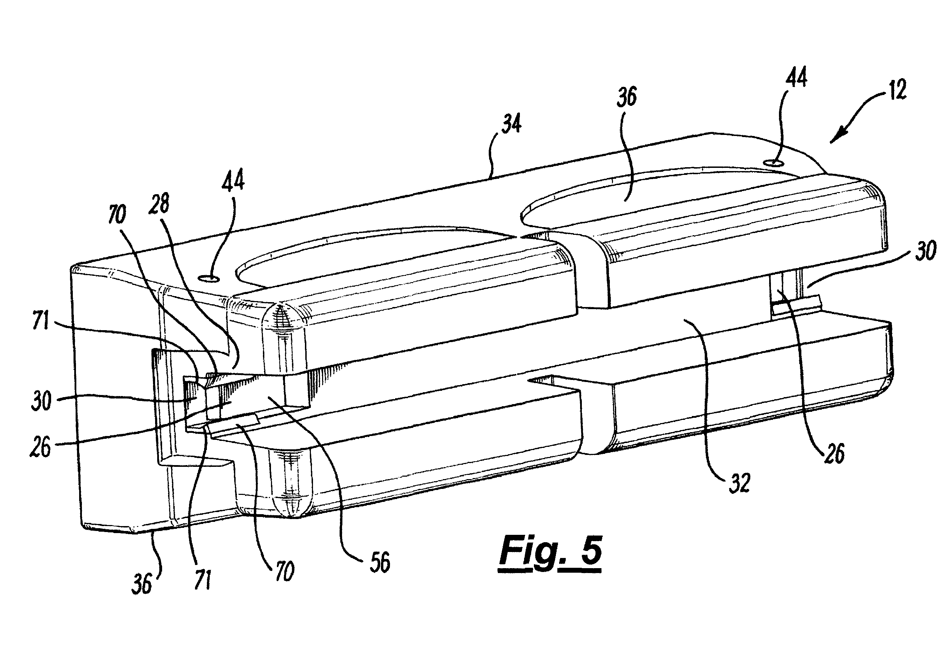

Referring to Fig 5, in one of the mounting arrangements 14, the item 12 defines a mounting member receiving space 56, in which the mounting member 18 is receivable, and which abuts or adjoins the cavity 26. The item 12 defines a support receiving recess 32.

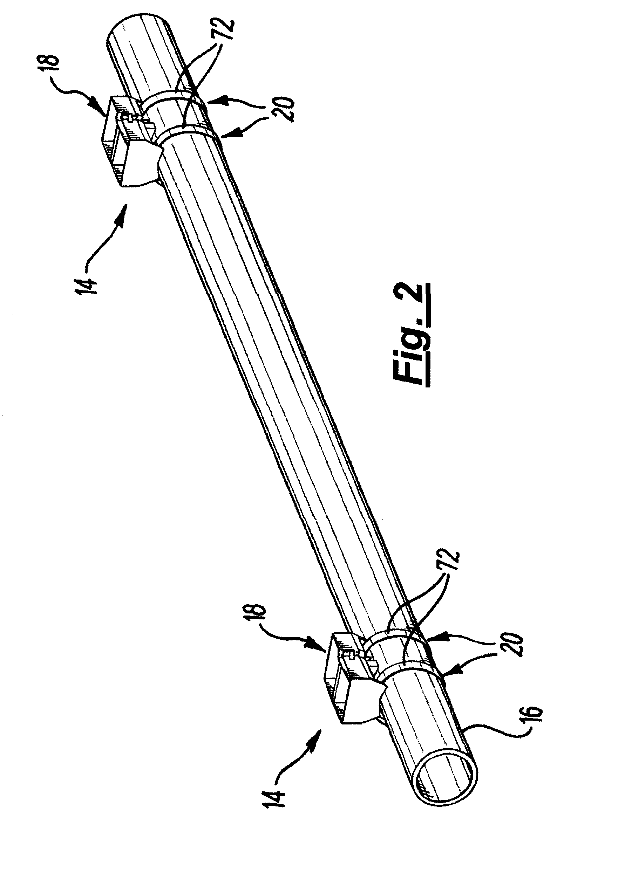

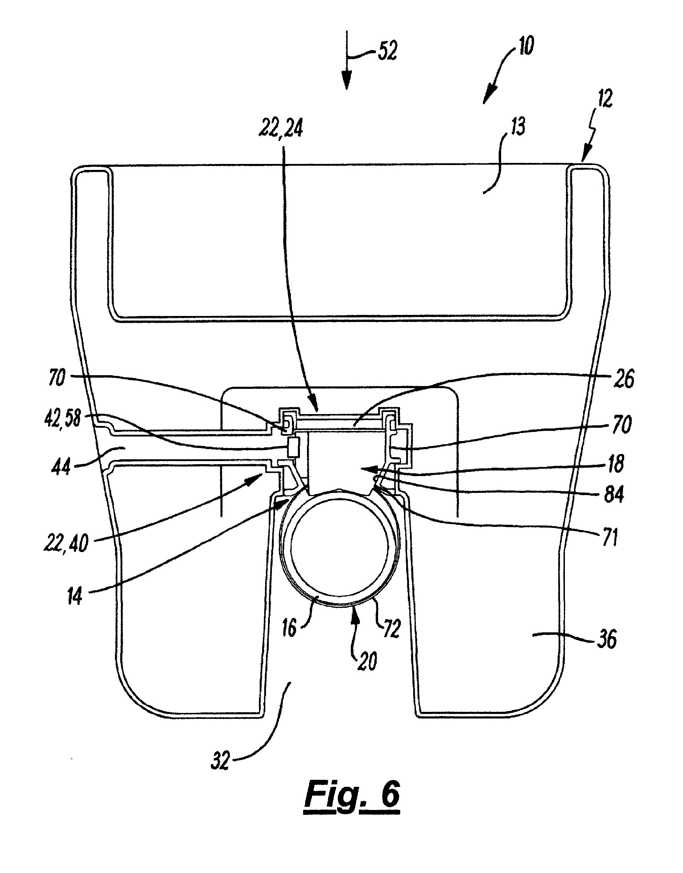

As shown in Fig 2, in use in the mounted position, each mounting member 18 extends outwardly and upwardly from the rail 16. As shown in Fig 6, each mounting member 18 is dovetail shaped in cross section, increasing in cross sectional width away from the rail 16. Each cavity 26 corresponds in cross-sectional shape to the cross sectional shape of the mounting members 18. Each cavity 26 extends outwardly oppositely to an end face 28 of the item 12, each end face 28 thereby defining an end face cavity aperture 30.

The item 12 includes a body 34 having side walls 36 which taper together downwardly and cavity lining inserts 70 having dovetail side walls 71 which define the cross-sectional dovetail shape of the cavity 26. The inserts 70 are formed separately to the body 34 and are held in position by retaining formations (for example, snap fit formations) or alternatively any suitable retaining means such as adhesive, plastic welding etc. The inserts 70 permit the dovetail shape of the cavity 26 to be formed, while retaining ease of manufacture through the provision of suitable draft angles for the moulding process.

Each association 22 includes an interference association 40 between the mounting member 18 and the item 12, which permits a push fit assembly of the item 12 to the mounting member 18 when moving to the mounted position, but substantially prevents movement of the mounting member 18 from the mounted position.

The interference association 22 includes an interference member 24, which must be moved by a user from a interference position to a accommodation position to permit movement of the mounting member 18 from the mounted position. The interference member 24 is biased to the interference position. In one example, the interference member 24 is formed of a resiliently deformable material which permits biasing of the interference member 24.

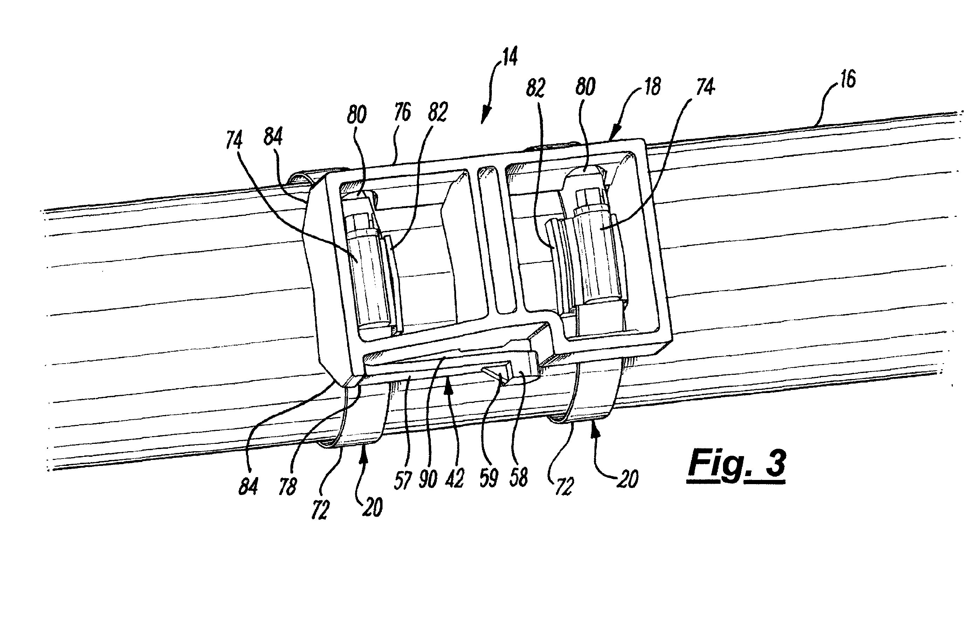

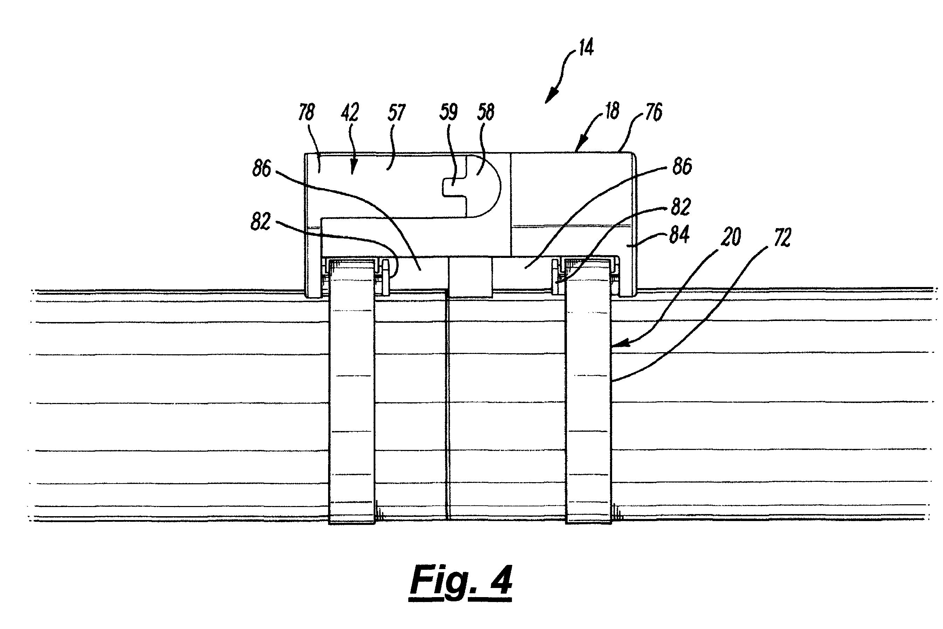

Referring to Figs 3 and 4, the mounting member 18 includes a body 76. The interference member 42 extends from the body 76, a hinge part 78 connecting the interference member 42 to the body 76. The body 76 defines a pair of adjacent fixing passages 86 thereunder. The body 76 includes a pair of fixing lugs 82 which extend towards each other, each lug 82 being located in a respective one of the fixing passages 86.

The interference member 42 includes a body 57 and a relatively enlarged head 58 at the free end of the interference member 42. A fillet 59 extends between the body 57 and the head 58.

The item 12 defines a pair of spaced passages 44, each of which extends from an outside surface of the item 12 to the cavity 26, and in each of which the interference member 42 is at least partially receivable. Each passage 44 forms part of one of the respective interference associations 40.

In use, the item assembly 10 is mounted to the support 16 as follows.

Initially, the item assembly 10 is in an unmounted position. The spaced mounting members 18 are fixed to the support 16 by the fixings 20. The spacing of the mounting members 18 on the support 16 corresponds with the spacing of the cavities 26. In this example, each of the fixings 20 includes a pair of hose clips 66, each hose clip 66 comprising a fixing strap or band 72 and a worm drive fastener 74. Each of the fixing straps 72 is passed through a separate one of the fixing passages 86 over the respective fixing lug 82 and around the support 16, and the respective worm drive fastener 74 tightened to clamp the respective mounting member 18 to the support 16. Advantageously, each of the worm drive fasteners 74 is located in one of the fixing passages 86 within the mounting member 18. The mounting member 18 defines a pair of access holes 80 which permit access by a tool such as a screw driver to tighten each of the worm drive fasteners 74.

The item 12 is then moved from the unmounted position to an intermediate position along a first direction indicated in Fig 6 by an arrow with reference numeral 52, which is substantially perpendicular to the support axis 50. In the intermediate position, the item 12 is located on the support 16 with one of the mounting members 18A located in the receiving space 56 adjacent to one of the cavities 26A and the other of the mounting members 18B located alongside and adjacent to the other of the cavities 26B, outside the support receiving recess 32.

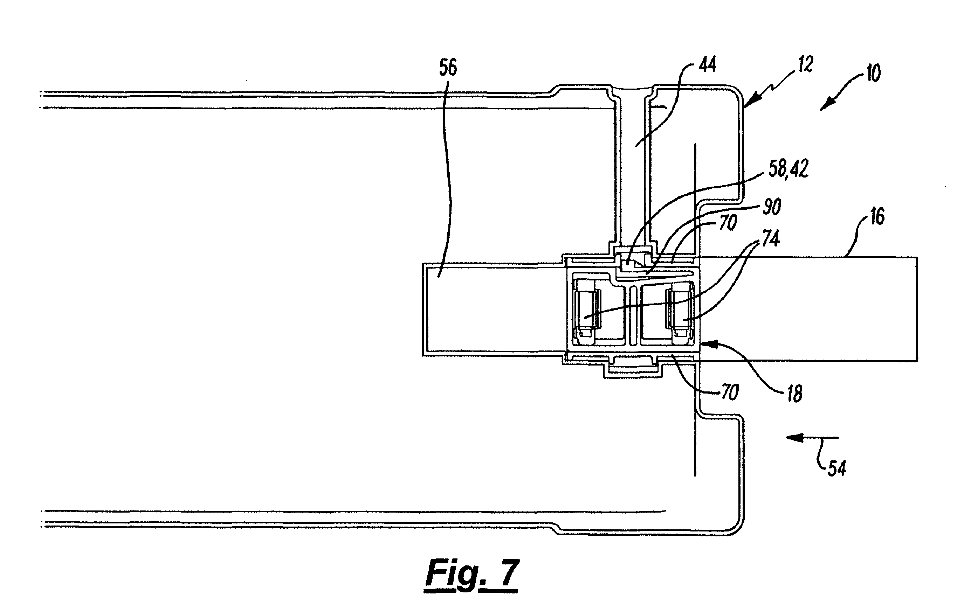

The item 12 is then moved from the intermediate position to the mounted position along a second direction 54 indicated in Fig 7 by an arrow with reference numeral 54, which is substantially perpendicular to the first direction 52, and parallel to the support axis 50. In this example, the second direction 54 comprises the said one direction. In the mounted position, the item longitudinal axis 48 extends substantially parallel with the support longitudinal axis 50.

The intermediate position abuts or adjoins the mounted position. In moving from the intermediate position to the mounted position, the two mounting members 18 are simultaneously slidably received within the cavities 26, the dovetail shape of the mounting members side walls 84 engaging with the dovetail shape of the cavity side walls 71. The engagement of the dovetail shapes substantially prevents movement of the item 12 away from the mounted position in a direction opposite to the first direction 52.

As the mounting members 18 move into the cavities 26, the interference members 42 are deformed by contact with the cavity dovetail side walls 71, moving from the interference position in which the enlarged head 58 projects outwardly from the accommodating recess 90 to the accommodation position in which the head 58 is located within the recess 90. This movement is facilitated by the fillet 59 which smooths the passage of the head 58 into the cavity 26.

As the mounting members 18 approach the mounted position, the heads 58 locate in the ends of the passages 44, and return to the interference position. In this position, the engagement of the heads 50 in the passages 44 substantially prevents further movement along the second direction 54, or in a direction opposite to the second direction 54.

Thus, in moving the item 12 to the mounted position, the item 12 must be moved in sequence from the unmounted position to the intermediate position along a first direction 52, and then from the intermediate position to the mounted position along a second direction 54. On reaching the mounted position, the item 12 "clicks" into place as the heads 58 of the interference members 42 locate in the ends of the passages 44, so that the user has a tactile feedback and thus a positive assurance that the item 12 is securely mounted to the support 16.

Advantageously, in the mounted position, the support 16 is wholly located within the support receiving recess 32, and thus the mounting members 18 and the fixings 20 are substantially not visible when the assembly 10 is viewed from above or from the side, as they are located between the item 12 and support 16. Thus it is advantageous that the recess 32 has a depth which at least partially and optimally wholly receives the depth of the support 16. This arrangement provides the advantage that access to the worm drive fasteners 74 by unauthorised persons is prevented, making unauthorised removal of the item 12 difficult.

The item 12 is dismounted from the support 16 as follows. A relatively long, thin, rod-like member must be inserted simultaneously along each of the passages 44 to push the heads 58 out of the ends of the passages 44 from the interference position to the accommodation position, disengaging heads 58 from the passages 44 and thereby permitting movement of the item 12 from the mounted position to the intermediate position in a direction opposite to the second direction 54.

Conveniently, a tool 60 as shown in figure 1 could be used, the tool 60 comprising a pair of spaced elongate rod-like projections 62 which correspond with the passages 44 of the pair of mounting arrangements 14 and a body engaging part 64, which extends between the projections 62. In use, the user could apply a force to the tool (for example, by leaning the trunk of his body against the body engaging part 64) is to move the interference members 42 to the accommodation position substantially simultaneously while slidably moving with his hands the item 12 from the mounted position to the intermediate position. In the intermediate position, the item 12 can simply be lifted upwardly in a direction opposite to the first direction 52 away from the support 16 to the unmounted position.

Thus, in moving the item 12 from the mounted position to the unmounted position, the item 12 must be moved in sequence from the mounted position to an intermediate position along a direction opposite to the second direction 54 and thence to the unmounted position along a direction opposite to the first direction 52.

The invention thus provides an item mounting assembly 10 having a number of advantages over known prior art arrangements. The fixings 20 can be conformed to different size and shape supports 16. The fixings 20 are standard fittings which are readily available in a variety of sizes, are relatively inexpensive and can be fitted quickly. In the mounted position, the only part of the fixings 20 which are visible are the straps 20, which are strong and relatively unobtrusive.

In the mounted position, it is not apparent to an authorised person how the item 12 can be dismounted from the support 16, as the mounting members 18 are not visible. Thus, the temptation to remove the item 12 from the support 16 is at least reduced for the opportunistic thief.

In a further example, a plurality of item mounting assemblies 10 are located end to end along the support 16, such that the clearance between adjacent item mounting assemblies 10 is less than the length of the mounting members 18, so that, apart from one of the item mounting assemblies 10 at one end of the plurality, none of the item mounting assemblies 10 can be dismounted, even if the interference members 42 are actuated.

Various other modifications could be made without departing from the scope of the invention. The item 12, support 16 and mounting members 18 could be of any suitable size and shape, and could be formed of any suitable material.

The invention could feasibly comprise just one of the types of association described above. For example, the invention could comprise an item mounting assembly 10 including just an entrant association 24, in which an item 12 defining a cavity 26 slidably locates in a second direction 54 over a mounting member 18. In this example, the cavity 26 and the mounting member 18 could have correspondingly shaped dovetail side walls which prevent movement from the mounted position in a direction opposite to a first direction 52. In this example, the second direction 54 comprises the said one direction.

In another example, the invention could comprise an item mounting assembly 10 including just an interference association 40 in which an item 12 defining a cavity 26 locates in a first direction 52 over a mounting member 18. In this example, the mounting member 18 includes an interference member 42 which in the mounted position locates in an end of a passage 44 defined by the item 12. The interference member 42 could be orientated in a different direction. For example, the interference member 42 could be orientated to permit movement to the mounted position along the first direction 52, which then comprises the said one direction.

Any of the features or steps of any of the embodiments shown or described could be combined in any suitable way, within the scope of the overall disclosure of this document.

There is thus provided an item mounting assembly which permits the mounting of the item to a support simply and quickly, and provides a mounting with enhanced security. The item can be simply and easily dismounted. Thus, time on site is reduced, reducing the hazards of installing and dismounting the items and reducing traffic disruption.

## Claims

1. An item mounting assembly (10), **characterised in that** the assembly includes an item (12) and a mounting arrangement (14) for mounting the item to a support (16) such as a rail, the arrangement including a mounting member (18), a fixing (20) for fixing the mounting member to the rail and an association (22) between the mounting member and the item, whereby in use the association locates the item in a mounted position on the mounting member and only permits the item to move to and from the mounted position along substantially one direction.

2. An assembly according to claim 1, in which the association includes an entrant association (24) between the mounting member and the item, the item defining a cavity (26) in which the mounting member is at least partially located in the mounted position, and the cavity forms part of the entrant association.

3. An assembly according to claim 2, in which the mounting member extends outwardly from the support, and increases in cross sectional width away from the support, and may be dovetail shaped in cross section, and the cavity corresponds in cross-sectional shape to the mounting member, the cavity extending to an end face (28) of the item, which defines an end face cavity aperture (30).

4. An assembly according to any of the preceding claims, in which, in the mounted position, the mounting member is substantially not visible, the mounting member being substantially wholly received within the cavity.

5. An assembly according to any of the preceding claims, in which the item defines a support receiving recess (32), and, in the mounted position, the support is at least partially received within the recess, which abuts or adjoins the cavity.

6. An assembly according to any of the preceding claims, in which the association includes an interference association (40) between the mounting member and the item, which permits a push fit assembly of the item to the mounting member when moving to the mounted position, but prevents movement of the mounting member from the mounted position.

7. An assembly according to claim 6, in which the interference association includes an interference member (42), which must be moved by a user from an interference position to an accommodation position to permit movement of the mounting member from the mounted position.

8. An assembly according to claim 7, in which the item defines a passage (44) in which the interference member is at least partially receivable in the interference position, the passage forming part of the interference association, the passage being arranged so that a tool (60) is required to be inserted therealong to move the interference member from the interference position to the accommodation position required.

9. An assembly according to any of the preceding claims, in which the item extends along a longitudinal axis (48), the support extends along a longitudinal axis (50), and, in the mounted position, the item longitudinal axis extends substantially parallel with the support longitudinal axis, the said one direction being along or parallel with the support longitudinal axis.

10. An assembly according to any of the preceding claims, in which the assembly is arranged so that in moving the item to the mounted position, the item must be moved in sequence from an unmounted position to an intermediate position along a first direction (52) and thence to the mounted position along a second direction (54), the second direction being different to the first direction, the said one direction being the same as the second direction, and in moving the item from the mounted position to the unmounted position, the item must be moved in sequence from the mounted position to an intermediate position along the second direction and thence to the unmounted position along the first direction.

11. An assembly according to any of the preceding claims, in which the item mounting assembly includes a pair of spaced mounting arrangements (14).

12. An assembly according to claim 11, in which, in one of the mounting arrangements, the item defines a mounting member receiving space (56), in which the mounting member is receivable, and which abuts or adjoins the cavity, and in the intermediate position, the respective mounting member is located in the receiving space.

13. An item, a mounting member or a tool for an item mounting assembly as defined in any of the preceding claims.

14. A method of mounting an item on a support, the method including providing an item mounting assembly, the assembly including an item and a mounting arrangement for mounting the item to a support such as a rail, the arrangement including a mounting member, a fixing for fixing the mounting member to the rail and an association between the mounting member and the item, whereby in use the association locates the item in a mounted position on the mounting member and only permits the item to move to and from the mounted position along substantially one direction.
